# EUROPÄISCHE PATENTANMELDUNG

(11) **EP 0 802 613 A2**
(43) Veröffentlichungstag der Anmeldung: **22.10.1997**
(21) Anmeldenummer: 97106060.3
(22) Anmeldetag: 14.04.1997
(51) Int. Cl.: H02K 29/06, H02K 29/12

(54) **Mehrphasiger, bürstenloser Gleichstrommotor**

(30) Priorität: 16.04.1996 DE 19614755
(71) Anmelder: PM DM Precision Motors Deutsche Minebea GmbH, 78549 Spaichingen (DE)
(72) Erfinder: Jauch, Horst, 78054 Schwenningen (DE); Schmid, Guido, 78098 Triberg/Nussbach (DE); Wünsch, Eberhard, 78056 VS-Weigheim (DE)
(74) Vertreter: Riebling, Peter, Dr.-Ing.

(57) **Zusammenfassung**

Die Erfindung betrifft einen mehrphasigen, bürstenlosen Gleichstrommotor, der für sensorlose Kommutierungssteuerung der Arbeitswicklungen ausgelegt ist. Um insbesondere bei niederen Drehzahlen des Motors eine ausreichende Induktionsspannung zur Kommutierungssteuerung zu erhalten, sind zusätzlich zu den Arbeitswicklungen des Motors Hilfswicklungen vorhanden, an welchen die Induktionsspannung abgegiffen wird. Durch Einsatz der Hilfswicklungen läßt sich der Drehzahlbereich des Motors beträchtlich nach oben und unten erweitern.

## Beschreibung

Die Erfindung betrifft einen Gleichstrommotor, insbesondere einen mehrphasigen, bürstenlosen Gleichstrommotor.

Mehrphasige, bürstenlose Gleichstrommotoren werden mittels einer elektronischen Ansteuerschaltung betrieben, welche die Aufgabe hat, die korrekte Kommutierung sicherzustellen, d.h. die Funktion des Kommutators herkömmlicher Gleichstrommotoren zu übernehmen. Die Ansteuerschaltung hat also die Aufgabe, die Motorwicklungen anzusteuern und evtl. Drehrichtung und Drehzahl des Motors zu regeln. Dazu werden heute integrierte Schaltkreise angeboten, welche diese Steueraufgaben übernehmen.

Zur korrekten Kommutierung des Motors ist es notwendig, die augenblickliche Drehlage und Drehgeschwindigkeit des Motors zu kennen. Diese Informationen können durch Hallsensoren, Drehimpulsgeber oder dergleichen erfaßt werden, die am oder im Motor angebracht sind. Eine elegantere Lösung ist, die Drehlage- und Drehzahlmessung ohne Sensor mit Hilfe der in den Arbeitswicklungen des Motors erzeugten Selbstinduktionsspannung zu erfassen. Dazu wird die während des Betriebs des Motors erzeugte Induktionsspannung in den Motorwicklungen gemessen und als Sensorspannung (Regelspannung) dem Ansteuerschaltkreis zurückgeführt. Der Regelungschaltkreis leitet daraus die augenblickliche Stellung und Drehzahl des Motors ab und steuert die Wicklungen des Motors entsprechend in richtiger Sequenz an. Bei sehr niederen Drehzahlen ist die Sensorspannung jedoch sehr klein und kann durch die Ansteuerschaltung nicht ausgewertet werden, so daß der erreichbaren Minimaldrehzahl des Motors Grenzen gesetzt sind.

Eine Möglichkeit die Drehzahl nach unten zu erweitern ist, die Anzahl der Windungen der Arbeitswicklungen des Motors zu erhöhen, um dadurch auch bei geringen Drehzahlen eine ausreichen hohe Induktionsspannung zu erhalten. Nachteil dieser Lösung ist, daß durch die höhere Windungszahl die induzierte Spannung bei hohen Drehzahlen jetzt höher ist und die Drehzahl durch die fest vorgegebene Speisespannung nach oben begrenzt ist, so daß sich der mögliche Drehzahlbereich zwar nach unten hin verschiebt aber insgesamt nicht erweitert. Ein übliches Drehzahltastverhältnis liegt bei 1:100, mit einer minimalen Drehzahl von z.B. 200 U/min. und einer maximalen Drehzahl von z.B. 20.000 U/min.

Der Erfindung liegt die Aufgabe zugrunde, einen Gleichstrommotor der eingangs genannten Art derart weiterzubilden, daß in Verbindung mit einer sensorlosen Ansteuerung des Motors ein wesentlich erweiterter Drehzahlbereich erzielt werden kann.

Zur Lösung dieser Aufgabe ist die Erfindung durch die technische Lehre des Patentanspruchs 1 gekennzeichnet.

Wesentliches Merkmal der Erfindung ist, daß der Motor neben den Arbeitswicklungen über eine gleiche Anzahl von Hilfswicklungen verfügt.

Die Hilfswicklungen sind mit den Arbeitswicklungen in Reihe geschaltet und weisen z.B. die doppelte Windungszahl auf als die Arbeitswicklungen. Arbeitswicklungen und Hilfswickungen können in bekannter Weise angeordnet sein. Die Sensorspannung für die Regelungsschaltung wird von den Hilfswicklungen erzeugt und an diesen abgenommen. Durch die doppelte Windungszahl gegenüber den Arbeitswicklungen ist die erzeugte Sensorspannung deutliche höher als bei Motoren, bei denen die Sensorspannung an den Arbeitswicklungen abgenommen wird. Insbesondere bei niederen Drehzahlen wird durch die Hilfswicklungen eine zur Auswertung durch die Ansteuerschaltung ausreichend hohe Sensorspannung erzeugt, so daß z.B. eine Minimaldrehzahl von 100 U/min. oder darunter, abhängig in erster Linie von der Anzahl der Windungen der Hilfswicklungen, erreicht werden kann.

Im folgenden wird die Neuerung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Neuerung hervor. Es zeigen:
- Figur 1:: das Funktionsprinzip einer sensorlosen Ansteuerung;
- Figur 2:: eine typische Ansteuerschaltung für einen bürstenlosen Motor;
- Figur 3:: eine Ausführungsform des erfindungsgemäßen Motors mit Ansteuerschaltung.

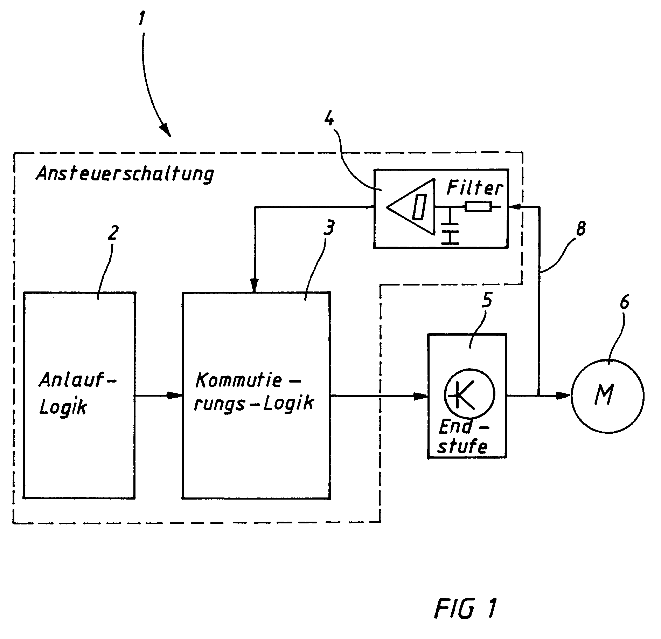

Figur 1 zeigt das Funktionsprinzip einer sensorlosen Ansteuerung für bürstenlose Gleichstrommotoren. Die Ansteuerschaltung 1 für den Motor 6 beinhaltet im wesentlichen eine Anlauflogik 2, eine Kommutierungslogik 3 und ein Filter 4. Je nach Leistung des Motors ist der Ansteuerschaltung 1 eine Leistungsendstufe 5 nachgeschaltet. Die Anlauflogik 2 erzeugt die beim Anlauf des Motors 6 aus dem Stillstand notwendigen Impulse für die Kommutierungslogik 3. Die sensorlose Ansteuerung basiert darauf, daß die beim Betrieb des Motors auftretende Induktionsspannung der jeweils nicht angesteuerten Motorwicklungen gemessen wird. Diese Sensorspannung wird jeweils über eine Sensorleitung 8 über das Filter 4 an die Kommutierungslogik 3 zurückgeführt und dort ausgewertet, wobei sich aus der Frequenz der Sensorspannung die Drehzahl und Drehrichtung des Motors ergibt. Diese Daten werden von der Ahsteuerschaltung 1 zur folgerichtigen Kommutierung der einzelnen Motorwicklungen und zur Drehrichtungs- und Drehzahlregelung benutzt.

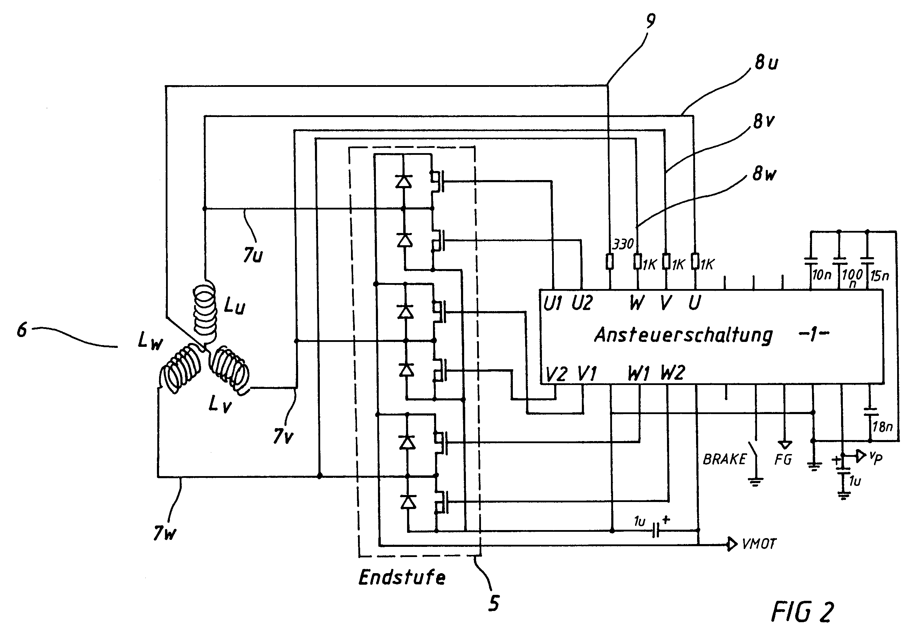

Figur 2 zeigt eine typische Ansteuerung für bürstenlose Gleichstrommotoren, wobei im Beispiel von einen 3-phasigen Gleichstrommotor ausgegangen wird. Es handelt sich um eine Vollwellen-Ansteuerung eines dreiphasigen Motors 6 über eine Leistungsendstufe 5, die für jede Motorwicklung L_{U}, L_{V} und L_{W} eine Gegentakt-Treiberstufe besitzt. In jedem der sechs möglichen Zustände der Endstufen 5 sind zwei der drei Ausgänge 7_{U}, 7_{V}, 7_{W} aktiv, wobei jeweils ein Ausgang als Stromquelle und der andere als Stromsenke arbeitet. Der dritte Ausgang bleibt hochohmig, so daß durch die Ansteuerschaltung die von der entsprechenden Motorwicklung erzeugte Induktionsspannung gemessen werden kann. Als Bezugspunkt für die Messung dient das Potential des Verbindungsknotens der Motorwicklungen, der über eine Leitung 9 mit der Steuerschaltung verbunden ist. Die Ansteuerschaltung 1 ist verantwortlich für die Ansteuerung der Ausgangstransistoren 5 und Auswahl der entsprechenden Motorwicklung, an welcher die Sensorspannung abgenommen wird.

Der Nulldurchgang der Induktionsspannung, der durch den von der Logik selektierten Meßeingang detektiert wird, wird dazu benutzt, um den genauen Augenblick für die nächste Kommuntierung zu berechnen, d.h. den Wechsel zum nächsten Zustand der Ausgänge. Die notwendige Verzögerung, die von der Motorlast abhängt, wird durch einen adaptive Verzögerungsschaltung berechnet.

Die Nulldurchgänge liefern auch Informationen über die augenblickliche Drehzahl des Motors, die zur Drehzahlregelung des Motors genutzt werden können.

Die Ansteuerung funktioniert nur, wenn der Motor 6 eine ausreichend hohe Induktionsspannung liefert, die von der Logik ausgewertet werden kann. Beim Anlaufen des Motors aus dem Stillstand, während der Motor keine Induktionsimpulse liefert, erzeugt eine Anlauflogik 2 (vgl. Fig. 1) die notwendigen Kommutierungsimpulse, solange bis diese vom Motor selbst geliefert werden.

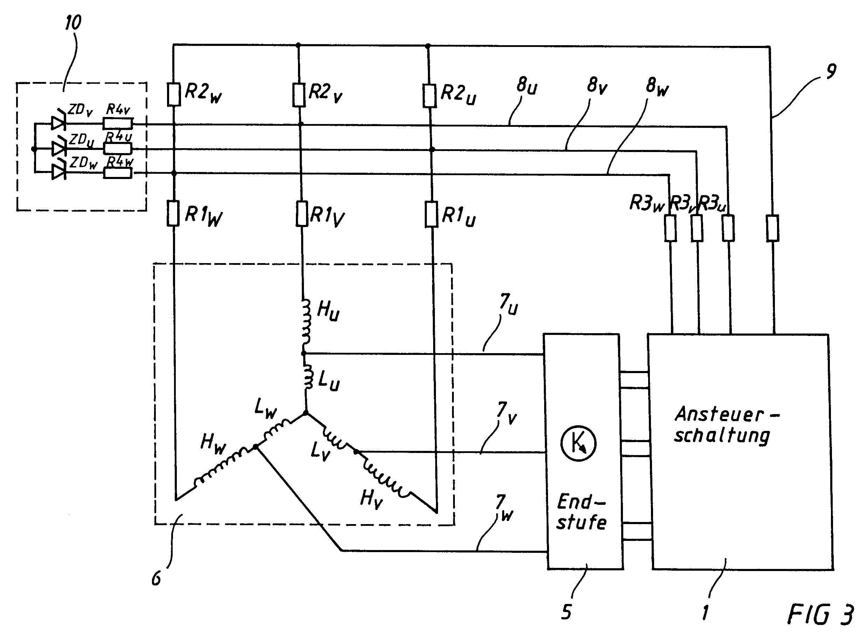

Figur 3 zeigt den erfindungsgemäßen Motor und dessen Ansteuerung.

Man erkennt wiederum die Ansteuerschaltung 1 für die einzelnen Arbeitswicklungen L_{U}, L_{U}, L_{W} des Motors, wobei der vom Steuerschaltkreis 1 gelieferte Steuerstrom durch eine Endstufe 5 verstärkt und über die Leitungen 7_{U}, 7_{V} und 7_{W} zu Arbeitswicklungen des Motors 6 geleitet wird. In einem Ausgangszustand arbeitet z.B. der Ausgang 7_{U} als Stromquelle und liefert Strom für die Arbeitswicklung L_{U}, der über die Wicklung L_{V} über die Leitung 7_{V}, die als Stromsenke geschaltet ist, abfließt.
Ausgang 7_{W} befindet sich dabei in hochohmigem Zustand.

Erfindungsgemäß besitzt der Motor drei zusätzliche Hilfswicklungen H_{U}, H_{V} und H_{W} , welche in Serie mit den jeweiligen Arbeitswicklungen L_{U}, L_{V} und L_{W} geschaltet sind. Ein Anschluß der Hilfswicklungen ist mit der jeweiligen Arbeitswicklung verbunden, der andere Anschluß ist über die Sensorleitungen 8_{U}, 8_{V}, 8_{W} nach außen geführt und an entsprechende Meßeingänge des Ansteuerschaltkreises 1 angeschlossen. Wichtig ist, daß die Hilfswicklungen nicht vom Motorbetriebsstrom durchflossen werden, sondern ausschließlich zur Kommutierungssteuerung des Motors dienen.

Werden, wie oben beschrieben, z.B. gerade die Arbeitswicklungen L_{U} und L_{V} von der Endstufe mit Strom versorgt, arbeiten die in Reihe geschalteten Wicklungen L_{W} und H_{W} als Sensorwicklungen, welche eine drehzahlabhängige Sensorspannung liefern. Durch die Reihenschaltung der beiden Wicklungen L_{W} und H_{W} und die sich dadurch ergebende hohe Gesamtwindungszahl ist die induzierte Spannung auch bei geringen Drehzahlen ausreichend hoch, um vom Ansteuerschaltkreis ausgewertet werden zu können. So ist es z.B. möglich, kontrollierte Drehzahlen von 100 U/min. oder darunter zu erzielen, abhängig von der Anzahl der Windungen der Hilfswicklungen H_{U}, H_{V}, H_{W}.

Der von der Endstufe 5 gelieferte Betriebsstrom für die Arbeitswicklungen fließt nicht durch die Hilfswicklungen, so daß die erreichbare Maximaldrehzahl nicht eingeschränkt wird.

Die Windungszahl der Arbeitswicklungen kann sogar gegenüber herkömmlichen Motoren reduziert werden, da die Arbeitswicklungen nicht mehr zur Erzeugung der Sensorspannungen benutzt werden müssen. Durch die Verringerung der Windungsanzahl der Arbeitswicklungen erhöht sich die erreichbare Maximaldrehzahl. Die Arbeitswicklungen müssen jedoch genügend Windungen aufweisen, um das für den bestimmten Einsatz des Motors geforderte Drehmoment sicherzustellen.

Da die Hilfswicklungen bei hohen Drehzahlen des Motors hohe Spannungen erzeugen, durch welche die Eingänge des Steuerungschaltkreises beschädigt werden können, werden Maßnahmen getroffen die Sensorspannung auf erlaubte Werte zu reduzieren.
Die an den Hilfswicklungen abgegriffene Spannung wird jeweils durch einen Spannungsteiler, bestehend aus den Widerständen R1 und R2, auf den gewünschten Wert eingestellt. An den Widerständen R2 wird über eine Leitung 9 das Bezugspotential abgegriffen. Die am Spannungsteiler abgegriffene Sensorspannung wird jeweils über eine Leitung 8_{U}, 8_{V}, 8_{W} und einen weiteren, strombegrenzenden Widerstand R3 an den Eingang der Ansteuerungsschaltung geführt.
Zur Vermeidung von Überspannung bei sehr hohen Drehzahlen ist eine Klemmschaltung 10 vorgesehen, welche die Höhe der Sensorspannungen auf einen Maximalwert begrenzt. Die Klemmschaltung 10 besteht für jeden Sensorzweig jeweils aus einer Zenerdiode ZD und einem Widerstand R4. Die der jeweiligen Sensorleitung zugeordnete Zenerdiode, z.B. ZD_{W} wird bei Überschreiten ihrer Zenerspannung leitend, und über die im Durchlaßbetrieb arbeitenden Nachbardioden ZD_{U} und ZD_{V} werden dem Widerstand R2_{W} des Spannugsteilers R1_{W}/R2_{W} die Widerstände R2_{U} und R2_{V} parallel geschaltet, so daß sich das Teilerverhältnis des Spannungsteilers R1_{W}/R2_{W} ändert und die Ausgangsspannung begrenzt wird.

Mit dem erfindungsgemäßen Motor lassen sich Drehzahltastverhältnisse vom 1:250 oder darüber erreichen.

### Dazu einige Beispiele:

### Herkömmlicher Motor:

- Arbeitswicklungen :: 50 Windungen
- Minimale Drehzahl :: 200 U/min. (begrenzt durch die Höhe der erzeugte Sensorspannung).
- Maximale Drehzahl :: 20.000 U/min. (begrenzt durch die Anzahl der Windungen).
- Drehzahlverhältnis:: 1:100

### Erfindungsgemäßer Motor

### Beispiel 1 :

- Arbeitswicklungen :: 30 Windungen
- Hilfswicklungen :: 80 Windungen
- Minimale Drehzahl :: 100 U/min.
- Maximale Drehzahl :: 26.000 U/min.
- Drehzahlverhältnis:: 1:260

### Beispiel 2:

- Arbeitswicklungen :: 40 Windungen
- Hilfswicklungen :: 70 Windungen
- Minimale Drehzahl :: 100 U/min.
- Maximale Drehzahl :: 22.000 U/min.
- Drehzahlverhältnis:: 1:220

### Zeichnungslegende

- 1: Ansteuerschaltung
- 2: Anlauflogik
- 3: Kommutierungslogik
- 4: Filter
- 5: Endstufe
- 6: Motor
- 7: Versorgungsanschlüsse
- 8: Sensorausgänge
- 9: Bezugsanschluß
- 10: Klemmschaltung

## Patentansprüche

1. Mehrphasiger, bürstenloser Gleichstrommotor ausgelegt für sensorlose Kommutierungssteuerung der Arbeitswicklungen, **dadurch gekennzeichnet**, daß jeder Arbeitswicklung (L_{U},L_{V},L_{W}) eine Hilfswicklung (H_{U},H_{V},H_{W}) zugeordnet ist.

2. Gleichstrommotor nach Anspruch 1, **dadurch gekennzeichnet**, daß jede Hilfswicklung mit der zugeordneten Arbeitswicklung in Serie geschaltet ist.

3. Gleichstrommotor nach einem der Ansprüche 1 oder 2, **dadurch gekennzeichnet**, daß das Verhältnis der Windungen von Arbeitswicklung (L_{U},L_{V},L_{W}) und Hilfswicklung (H_{U},H_{V},H_{W}) vorzugsweise zwischen 1:1,5 und 1:3 beträgt.

4. Gleichstrommotor nach einem der Ansprüche 1 bis 3, **dadurch gekennzeichnet**, daß zwischen Arbeitswicklungen und Hilfswicklungen jeweils ein Anschluß (7_{U},7_{V},7_{W}) vorgesehen ist, über welche die Versorgungsspannung des Motors zugeführt wird.

5. Gleichstrommotor nach einem der Ansprüche 1 bis 4, **dadurch gekennzeichnet**, daß die freien Anschlüsse (8_{U},8_{V},8_{W}) der Hilfswicklungen (H_{U},H_{V},H_{W}) mit zugeordneten Meßeingängen der Regelungsschaltung (1) verbunden sind.

6. Gleichstrommotor nach einem der Ansprüche 1 bis 5, **dadurch gekennzeichnet**, daß die Ausgangsspannung der Hilfswicklungen mit durch eine Klemmschaltung (10) auf einen maximalen Wert begrenzt werden.
